# EUROPÄISCHE PATENTSCHRIFT

(11) **EP 2 406 527 B1**
(45) Veröffentlichungstag und Bekanntmachung des Hinweises auf die Patenterteilung: **15.10.2014**
(21) Anmeldenummer: 10706645.8
(22) Anmeldetag: 04.03.2010
(51) Int. Cl.: F16J 15/34

(54) **WELLENDICHTUNG FÜR EINE STRÖMUNGSMASCHINE**
SHAFT SEAL FOR A TURBOMACHINE
JOINT D'ARBRE POUR UNE TURBOMACHINE

(30) Priorität: 10.03.2009 DE 102009012038
(43) Veröffentlichungstag der Anmeldung: 18.01.2012
(73) Patentinhaber: Siemens Aktiengesellschaft, 80333 München (DE)
(72) Erfinder: ALFES, Ludger, 46282 Dorsten (DE); ZACHARIAS, Wolfgang, 47198 Duisburg (DE)
(86) Internationale Anmeldenummer: PCT/EP2010/052731
(87) Internationale Veröffentlichungsnummer: WO 2010/102940

(56) Entgegenhaltungen:
- EP-A1- 0 819 873
- EP-A1- 1 914 387
- DE-C1- 4 225 642
- JP-A- 2004 084 688
- US-A- 3 508 758

## Beschreibung

Die Erfindung betrifft eine Wellendichtung für eine Strömungsmaschine.

Unter einer Strömungsmaschine wird beispielsweise ein Turboverdichter, ein Expander oder ein Verdrängerverdichter verstanden. Der Turboverdichter, weist ein Gehäuse und einen Rotor auf, der in dem Gehäuse untergebracht ist. Der Rotor weist eine Welle auf, die an ihren Längsenden außerhalb des Gehäuses gelagert ist. Dadurch tritt die Welle an ihren Längsenden durch das Gehäuse, wobei dort die Welle gegen das Gehäuse mit einer Wellendichtung abgedichtet ist. Somit ist die Innenseite des Turboverdichters von der Atmosphäre getrennt. Der Aufbau der Wellendichtung ist herkömmlich derart, dass von der Innenseite des Turboverdichters her betrachtet zuerst eine Gastrennung und dann eine Öltrennung angeordnet sind. Die Innenseite des Turboverdichters, die Prozessseite, wird mittels der Wellendichtung von der Atmosphäre und der Öltrennung vom Lagerbereich getrennt. Die Wellendichtung ist beispielsweise als eine gasgeschmierte Gleitringdichtung ausgeführt, die als eine Tandemdichtung ausgebildet ist. Die Tandemdichtung ist aus zwei gasgeschmierte Gleitringdichtungen aufgebaut, die jeweils einen Gleitring, der an dem Gehäuse befestigt ist, und einen Gegenring aufweisen, der an der Welle befestigt ist. Jeder Gleitring ist seinem zugeordneten Gegenring unter Ausbilden eines Axialspalts axial unmittelbar benachbart angeordnet. Die Ringe sind in der Tandemdichtung derart angeordnet, dass von der Primärdichtung die Prozessseite gegen einen Fackeldruck, abgedichtet ist. Mit der Sekundärdichtung wird die Abtrennung gegen die Atmosphäre bewerkstelligt, wobei die Sekundärdichtung zusätzlich als Redundanz zur Primärdichtung bei Versagen der Primärdichtung vorgesehen ist. Zwischen den beiden Gegenringen wird Sperrgas eingebracht, das zum Sperren der Axialspalte verwendet wird. Um den Lagerbereich abzutrennen, ist als die Öltrennung beispielsweise eine Tertiärdichtung vorgesehen, die als eine Labyrinthdichtung oder eine Kohleringdichtung ausgeführt sein kann. Die Tertiärdichtung ist mit einem Sperrgas beaufschlagt, wodurch ihre Sperrung bewerkstelligt wird.

Als das Sperrgas kann Luft verwendet werden. Beim Betrieb des Turboverdichters vermischt sich die Luft aus dem Sperrgas mit dem Prozessgas, wodurch ein entzündliches Gemisch entstehen kann, wenn das Prozessgas brennbar ist. Das Entstehen des zündfähigen Gasgemisches ist aus Sicherheitsgründen stets zu unterbinden, was beispielsweise in einer Explosionsschutzrichtlinie vorgeschrieben ist. Abhilfe schafft die Verwendung eines Inertgases als das Sperrgas, beispielsweise Stickstoff. Bei dem Betrieb des Turboverdichters in einer petrochemischen Anlage ist der Verbrauch an Stickstoff als das Sperrgas jedoch hoch, so dass der Aufwand der Bereitstellung des Stickstoffs und die damit verbundenen Kosten beträchtlich sind.

In EP 1 914 387 A1 und DE 42 25 642 C1 sind Trockengasdichtungen beschrieben, die eine Turbomaschine mit Prozessgas gegen die Atmosphäre unter Zuhilfenahme eines Sperrgases abdichten.

Aufgabe der Erfindung ist es, eine Wellendichtung für eine Strömungsmaschine zu schaffen, wobei die Strömungsmaschine Ressourcen schonend bei niedrigen Kosten betreibbar ist.

Die erfindungsgemäße Wellendichtung für eine Strömungsmaschine, deren Prozessseite gegen die Atmosphäre durch die Wellendichtung abdichtbar ist, weist eine mit einem Prozessgas beaufschlagbare und prozessseitig sperrbare Prozessgasdichtung und eine mit Luft beaufschlagbare und atmosphärenseitig sperrbare Atmosphärendichtung sowie eine um eine Welle der Strömungsmaschine verlaufende Entlüftungskammer auf, die zwischen der Prozessgasdichtung und der Atmosphärendichtung zum Sammeln und Abführen von Prozessgasleckage, die durch die Prozessgasdichtung getreten ist, und Luftleckage, die durch die Atmosphärendichtung getreten ist, angeordnet ist, wobei die Entlüftungskammer an ihrer radial innenliegenden Seite einen Leckageeintritt und an ihrer radial außenliegenden Seite einen Leckageaustritt sowie zwischen dem Leckageeintritt und dem Leckageaustritt Einbauten aufweist, wobei die Einbauten derart dimensioniert sind, dass die Entlüftungskammer eine Flammensperrfunktion bezüglich einer Entzündung der Leckage am Leckageeintritt hat und/oder die Leckage in der Entlüftungskammer nicht zündfähig ist.

Bei der Gefahrenbeurteilung des in der Entlüftungskammer eingeschlossenen, explosiven Gasgemisches gemäß einer Explosionsschutzrichtlinie ist das eingeschlossene Volumen und die zur Kühlung vorhandene Oberfläche von entscheidender Bedeutung. Durch das Vorsehen der Einbauten in der Entlüftungskammer ist diese erfindungsgemäß derart dimensioniert, dass in der Entlüftungskammer das Gasgemisch ein Volumen hat, das klein ist, wodurch das in der Entlüftungskammer sich befindliche Gasgemisch gemäß der Explosionsschutzrichtlinie als nicht zündfähig einzustufen ist. Ferner wird von den Einbauten eine vergrößerte Oberfläche in der Entlüftungskammer bereitgestellt, via die das Gasgemisch in der Entlüftungskammer zusätzlich gekühlt wird. Sollte dennoch eine Zündung in der Entlüftungskammer stattfinden, so wird die dabei sich entwickelnde Wärme von der vergrößerten Oberfläche sofort abgeführt, so dass die Zündung wieder sofort erlischt.

Es ist erfindungsgemäß, dass die Einbauten radial verlaufende Rippen aufweisen, mit denen in der Entlüftungskammer Entlüftungskanäle ausgebildet sind, durch die die Leckage von dem Leckageeintritt zu dem Leckageaustritt strömbar ist. Bevorzugtermaßen ist die Entlüftungskammer als ein zylindrischer Raum um die Welle ausgebildet, in dem die Rippen strahlförmig um die Welle sich erstrecken. Die Umfangserstreckung von wenigstens einigen der Rippen nimmt bevorzugt mit dem Radius zu, wobei die Rippen bevorzugt derart dimensioniert sind, dass über den Radius der Querschnitt der Entlüftungskanäle konstant ist. Alternativ ist es bevorzugt, dass die Umfangserstreckung von wenigstens einigen der Rippen über dem Radius konstant ist.

Der effektiv durchströmte Querschnitt am Leckageeintritt ist bevorzugt in etwa gleich groß dem effektiv durchströmten Querschnitt am Leckageaustritt. Ferner ist es bevorzugt, dass der effektiv durchströmte Querschnitt am Leckageaustritt gleich oder größer dem effektiv durchströmten Querschnitt einer am Leckageaustritt angeschlossenen Leckageabführleitung ist.

Die Rippen an ihren radial innenliegenden Seiten sind bevorzugt abgerundet ausgebildet, so dass das Durchströmen der Leckage durch die Entlüftungskammer verlustarm ist. Damit ist ein zusätzlicher Strömungswiderstand hervorgerufen durch die Rippen und eine damit einhergehende ungewünschte Druckerhöhung unterbunden. Die Anzahl und die Form der Rippen ist bevorzugt so gewählt, dass die Rippen zum Kühlen der Leckage in der Entlüftungskammer geeignet sind.

Bevorzugtermaßen ist die Prozessgasdichtung eine gasgeschmierte Gleitringdichtung und/oder die Atmosphärendichtung eine Labyrinthdichtung oder eine Kohleringdichtung. Die gasgeschmierte Gleitringdichtung ist bevorzugt in Tandemanordnung ausgeführt, wobei die gasgeschmierte Gleitringdichtung eine mit dem Prozessgas beaufschlagbare und prozessseitig sperrbare Primärdichtung und eine in Richtung zur Atmosphäre hinter der Primärdichtung angeordnete, diese absichernde Sekundärdichtung aufweist, wobei zwischen der Sekundärdichtung und der Atmosphärendichtung die Entlüftungskammer angesiedelt ist. Ferner ist es bevorzugt, dass die Einbauten ein Drahtgeflecht aufweisen.

Im Folgenden wird eine bevorzugte Ausführungsform der erfindungsgemäßen Wellendichtung anhand der beigefügten schematischen Zeichnungen erläutert. Es zeigt:
Fig. 1 einen Längsschnitt durch die Ausführungsform der Wellendichtung und
Fig. 2 einen Querschnitt durch die Entlüftungskammer der Ausführungsform der Wellendichtung aus Fig. 1.

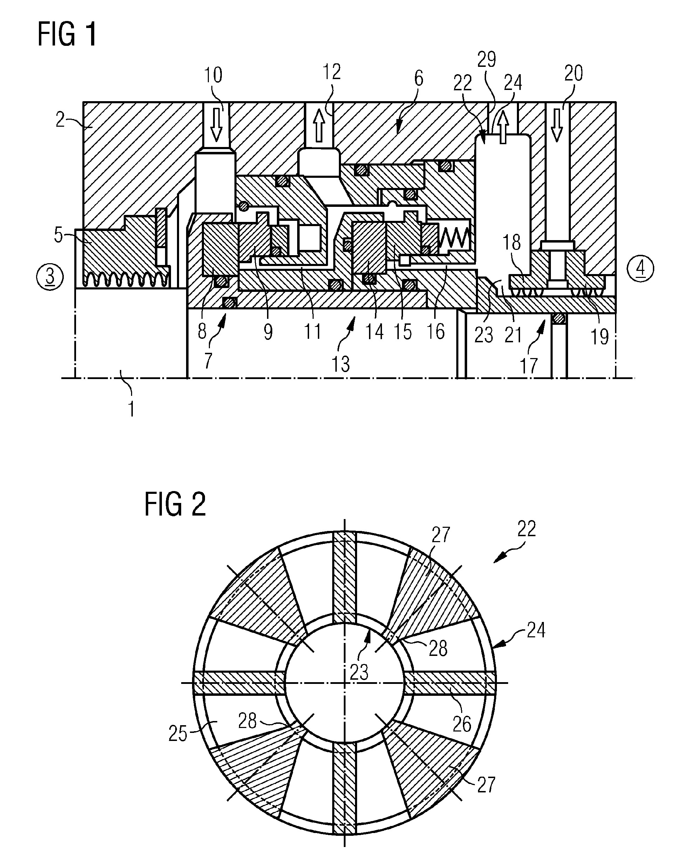

Wie es aus Fig. 1 und 2 ersichtlich ist, weist ein Turboverdichter eine Turboverdichterwelle 1 und ein Turboverdichtergehäuse 2 auf, wobei die Turboverdichterwelle 1 an ihrem gezeigten Längsende durch das Turboverdichtergehäuse 2 dringt.

Das Innere des Turboverdichters ist von einer Prozessseite 3 gebildet, wohingegen außerhalb des Turboverdichters die Atmosphäre 4 vorherrscht. Prozessseitig herrscht in dem Turboverdichter beim Betrieb ein höherer Druck als der Atmosphärendruck, so dass die Turboverdichterwelle 1 gegen das Turboverdichtergehäuse 2 von der Prozessseite 3 zu der Atmosphäre 4 hin abgedichtet ist. Die Abdichtung wird von einer Labyrinthdichtung 5, die prozessseitig vorgesehen ist, und einer gasgeschmierten Gleitringdichtung 6, die zwischen der Labyrinthdichtung 5 und der Atmosphäre 4 eingebaut ist, bewerkstelligt. Die gasgeschmierte Gleitringdichtung 6 weist eine Primärdichtung 7 auf, die unmittelbar hinter der Labyrinthdichtung 5 angeordnet ist und zum Abdichten des dort vorherrschenden Drucks ausgelegt ist. Die Primärdichtung 7 weist einen Gegenring 8, der auf der Turboverdichterwelle 1 montiert ist, und einen Gleitring 9 auf, der in das Turboverdichtergehäuse 2 eingebaut ist. Der Gegenring 8 und der Gleitring 9 sind axial nebeneinander liegend angeordnet, wobei der Gegenring 8 zwischen der Labyrinthdichtung 5 und dem Gleitring 9 angeordnet ist. Beim Betrieb des Turboverdichters dreht sich der Gegenring 8 mit der Turboverdichterwelle 1, so dass eine Relativbewegung zwischen dem Gegenring 8 und dem Gleitring 9 vorherrscht. Dadurch ist beim Betrieb des Turboverdichters ein Axialspalt zwischen dem Gegenring 8 und dem Gleitring 9 zu erzeugen, so dass der Gegenring 8 mit dem Gleitring 9 nicht in Berührkontakt steht. Der Axialspalt wird durch eine Beaufschlagung der Primärdichtung 7 mit Produktgas erzeugt, das der Primärdichtung 7 radial durch eine in dem Turboverdichtergehäuse 2 vorgesehene Produktgasspülleitung 10 zugeführt wird.

Der Axialspalt hat jedoch zur Folge, dass durch ihn Produktgas als Leckage hindurchtritt und sich in einem Leckageraum 11 stromab der Primärdichtung 7 ansammelt. Das in dem Leckageraum 11 angesammelte Leckagegas wird beispielsweise an eine Fackel durch eine Fackelleitung 12 abgeführt, die in dem Turboverdichtergehäuse 2 entsprechend vorgesehen ist. Den in dem Leckageraum 11 bzw. in der Fackelleitung 12 vorherrschenden Druck dichtet eine Sekundärdichtung 13 ab, die an der der Labyrinthdichtung 5 abgewandten Seite der Primärdichtung 7 angeordnet ist. Die Sekundärdichtung 13 ist analog zur Primärdichtung 7 aufgebaut, wobei die Sekundärdichtung 13 einen mit der Turboverdichterwelle 1 verbundenen Gegenring 14 und einen mit dem Turboverdichtergehäuse 2 verbundenen stationären Gleitring 15 aufweist. Der Gegenring 14 und der Gleitring 15 liegen wie der Gegenring 8 und der Gleitring 9 der Primärdichtung 7 nebeneinander unter Ausbildung eines Axialspalts. Stromab der Sekundärdichtung 13 ist ein Leckageraum 16 ausgebildet, indem die durch die Sekundärdichtung 13 strömende Leckage angesammelt wird.

Zum Abtrennen der Atmosphäre 4 von dem Leckageraum 16 ist zwischen der Sekundärdichtung 13 und der Atmosphäre 4 eine Tertiärdichtung 17 vorgesehen, die aus einer prozessseitigen Labyrinthdichtung 18 und einer atmosphärenseitigen Labyrinthdichtung 19 besteht. Zwischen den Labyrinthdichtungen 18, 19 ist eine Luftspülleitung 20 vorgesehen, durch die Luft zum Spülen der Labyrinthdichtungen 18, 19 strömt. Der durch die Luftspülleitung 20 geförderte Luftstrom teilt sich an der Strömungsmaschinenwelle 1 auf, so dass die Luft sowohl die prozessseitige Labyrinthdichtung 18 als auch die atmosphärenseitige Labyrinthdichtung 19 passiert. Der Luftanteil, der die prozessseitige Labyrinthdichtung 18 passiert, strömt in einen Leckageraum 21, der wie der Leckageraum 16 der Sekundärdichtung 13 in eine Entlüftungskammer 22 mündet. Die Entlüftungskammer 22 ist als ein Ringraum zwischen der Sekundärdichtung 13 und der Tertiärdichtung 17 angeordnet, wobei am radial innenliegenden Teil der Entlüftungskammer 22 ein Leckageeintritt 22 vorgesehen ist, durch den von dem Leckageraum 21 der Tertiärdichtung 17 Luft und von dem Leckageraum 16 der Sekundärdichtung 13 Prozessgas in die Entlüftungskammer 23 einströmt. Radial außenseitig ist an der Entlüftungskammer 22 ein Leckagegasaustritt vorgesehen, an dem eine Entlüftungsleitung 29 angeschlossen ist.

Die Entlüftungskammer 22 weist in ihrem Innenraum eine Mehrzahl an Rippen 26, 27 auf, die strahlenförmig radial von dem Leckagegaseintritt 23 zu dem Leckagegasaustritt 24 sich erstrecken. Die Rippen 26, 27 erstrecken sich ebenfalls in Axialrichtung, so dass von den Rippen in der Entlüftungskammer 22 eine Mehrzahl an Entlüftungskanälen 25 zwischen den Rippen 26, 27 ausgebildet ist.

Wie es in Fig. 2 gezeigt ist, sind in der Entlüftungskammer 22 acht Rippen 26, 27 vorgesehen, die gleichmäßig über den Umfang verteilt angeordnet sind. Horizontal und vertikal verlaufend sind insgesamt vier gleichdicke Rippen 26 und diagonal verlaufend sind insgesamt vier sich aufweitende Rippen 27 ausgebildet. Die radialen Dickenverläufe der Rippen 26, 27 sind derart gewählt, dass das Gesamtvolumen der Entlüftungskanäle 25 in der Entlüftungskammer 22 derart klein ist, dass gemäß einer Explosionsschutzrichtlinie das in den Entlüftungskanälen 25 sich befindende Gasgemisch, nämlich ein Gasgemisch aus Luft und Prozessgas, als nicht zündfähig einzustufen ist. Dabei ist berücksichtigt, dass der Querschnitt des Leckagegasaustritts 24 an dem Querschnitt der Entlüftungsleitung 29 angepasst ist und der Querschnitt des Leckagegaseintritts 23 gleich groß dem Querschnitt des Leckagegasaustritts 24 ist. Damit ist es unterbunden, dass in der Entlüftungskammer 22 unregelmäßige und somit übermäßig verlustbehaftete Strömungsverhältnisse vorherrschen. Ferner sind an dem Leckagegaseintritt 23 an den Rippen 26, 27 Eintrittsradien 28 vorgesehen, damit der Strömungswiderstand der Rippen 26, 27 möglichst gering ist.

## Patentansprüche

1. Wellendichtung für eine Strömungsmaschine, deren Prozessseite (3) gegen die Atmosphäre (4) durch die Wellendichtung (7, 13, 17) abdichtbar ist, mit einer mit einem Prozessgas (10) beaufschlagbaren und prozessseitig (3) sperrbaren Prozessgasdichtung (7, 13) und einer mit Luft (20) beaufschlagbaren und atmosphärenseitig (4) sperrbaren Atmosphärendichtung (17) sowie einer um eine Welle (1) der Strömungsmaschine verlaufenden Entlüftungskammer (22), die zwischen der Prozessgasdichtung (7, 13) und der Atmosphärendichtung (17) zum Sammeln und Abführen von Prozessgasleckage, die durch die Prozessgasdichtung (7, 13) getreten ist, und Luftleckage, die durch die Atmosphärendichtung (17) getreten ist, angeordnet ist, wobei die Entlüftungskammer (22) an ihrer radial innenliegenden Seite einen Leckageeintritt (23) und an ihrer radial außenliegenden Seite einen Leckageaustritt (24) sowie zwischen dem Leckageeintritt (23) und dem Leckageaustritt (24) Einbauten (26, 27) aufweist, **dadurch gekennzeichnet, dass** die Einbauten radial verlaufende Rippen (26, 27) aufweisen, mit denen in der Entlüftungskammer (22) Entlüftungskanäle (25) ausgebildet sind, durch die die Leckage von dem Leckageeintritt (23) zu dem Leckageaustritt (24) strömbar ist, wodurch das Volumen des Gemischs aus der Prozessgasleckage und der Luftleckage in der Entlüftungskammer (22) derart klein ist, dass die Entlüftungskammer (22) eine Flammensperrfunktion bezüglich einer Entzündung der Leckage am Leckageeintritt (23) hat und/oder die Leckage in der Entlüftungskammer (22) nicht zündfähig ist.

2. Wellendichtung gemäß Anspruch 1,
wobei die Entlüftungskammer (22) als ein zylindrischer Ringraum um die Welle (1) ausgebildet ist, in dem die Rippen (26, 27) strahlförmig um die Welle (1) sich erstrecken.

3. Wellendichtung gemäß Anspruch 2,
wobei die Umfangserstreckung von wenigstens einigen der Rippen (27) mit dem Radius zunimmt.

4. Wellendichtung gemäß Anspruch 3,
wobei die Rippen (27) derart dimensioniert sind, dass über den Radius der Querschnitt der Entlüftungskanäle (25) konstant ist.

5. Wellendichtung gemäß einem der Ansprüche 2 bis 3,
wobei die Umfangserstreckung von wenigstens einigen der Rippen (26) über den Radius konstant ist.

6. Wellendichtung gemäß Anspruch 2 bis 4,
wobei der effektiv durchströmte Querschnitt am Leckageeintritt (23) in etwa gleich groß dem effektiv durchströmten Querschnitt am Leckageaustritt (24) ist.

7. Wellendichtung gemäß Anspruch 6,
wobei der effektiv durchströmte Querschnitt am Leckageaustritt (24) gleich oder größer dem effektiv durchströmten Querschnitt einer am Leckageaustritt (24) angeschlossenen Leckageabführleitung (29) ist.

8. Wellendichtung gemäß einem der Ansprüche 1 bis 6,
wobei die Rippen (26, 27) an ihren radial innenliegenden Seiten abgerundet (28) ausgebildet sind, so dass das Durchströmen der Leckage durch die Entlüftungskammer (22) verlustarm ist.

9. Wellendichtung gemäß einem der Ansprüche 1 bis 8,
wobei die Anzahl und die Form der Rippen (26, 27) so gewählt ist, dass die Rippen (26, 27) zum Kühlen der Leckage in der Entlüftungskammer (25) geeignet sind.

10. Wellendichtung gemäß einem der Ansprüche 1 bis 9,
wobei die Gasdichtung (7, 13) eine gasgeschmierte Gleitringdichtung und/oder die Atmosphärendichtung (17) eine Labyrinthdichtung oder eine Kohleringdichtung ist.

11. Wellendichtung gemäß Anspruch 10,
wobei die gasgeschmierte Gleitringdichtung in Tandemanordnung ausgeführt ist, wobei die gasgeschmierte Gleitringdichtung eine mit dem Prozessgas beaufschlagbare und prozessseitig sperrbare Primärdichtung (7) und eine in Richtung zur Atmosphäre hinter der Primärdichtung (7) angeordnete, diese absichernde Sekundärdichtung (13) aufweist, wobei zwischen der Sekundärdichtung (13) und der Atmosphärendichtung (17) die Entlüftungskammer (22) angesiedelt ist.

12. Wellendichtung gemäß einem der Ansprüche 1 bis 11,
wobei die Einbauten ein Drahtgeflecht aufweisen.

## Claims

1. Shaft seal for a turbomachine, the process side (3) of which can be sealed against the atmosphere (4) by means of the shaft seal (7, 13, 17), having a process gas seal (7, 13) which can be acted upon by a process gas (10) and be blocked on the process side (3), and an atmosphere seal (17) which can be acted upon by air (20) and be blocked on the atmosphere side (4), and also having a ventilation chamber (22) which extends around the shaft (1) of the turbomachine and is arranged between the process gas seal (7, 13) and the atmosphere seal (17) for collecting and discharging process gas leakage, which has passed through the process gas seal (7, 13), and air leakage, which has passed through the atmosphere seal (17), wherein the ventilation chamber (22) has a leakage inlet (23) on its radially inner side and a leakage outlet (24) on its radially outer side, and also built-in components (26, 27) between the leakage inlet (23) and the leakage outlet (24), **characterized in that** the built-in components feature radially extending ribs (26, 27) by which ventilation passages (25) are formed in the ventilation chamber (22) and through which the leakage can flow from the leakage inlet (23) to the leakage outlet (24), whereby the volume of the mixture from the process gas leakage and the air leakage in the ventilation chamber (22) is so small that the ventilation chamber (22) has a flame blocking function with regard to ignition of the leakage at the leakage inlet (23) and/or the leakage in the ventilation chamber (22) is not ignitable.

2. Shaft seal according to Claim 1,
wherein the ventilation chamber (22) is formed as a cylindrical annulus around the shaft (1) in which the ribs (26, 27) extend radially around said shaft (1).

3. Shaft seal according to Claim 2,
wherein the circumferential extent of at least some of the ribs (27) increases with the radius.

4. Shaft seal according to Claim 3,
wherein the ribs (27) are dimensioned in such a way that the cross section of the ventilation passages (25) is constant over the radius.

5. Shaft seal according to one of Claims 2 and 3,
wherein the circumferential extent of at least some of the ribs (26) is constant over the radius.

6. Shaft seal according to one of Claims 2 to 4,
wherein the cross section which is effectively exposed to throughflow at the leakage inlet (23) is approximately equal in size to the cross section which is effectively exposed to throughflow at the leakage outlet (24).

7. Shaft seal according to Claim 6,
wherein the cross section which is effectively exposed to throughflow at the leakage outlet (24) is equal to or larger than the cross section, which is effectively exposed to throughflow, of a leakage discharge line (29) which is connected to the leakage outlet (24).

8. Shaft seal according to one of Claims 1 to 6,
wherein the ribs (26, 27) are formed with a rounding (28) on their radially inner sides so that the flow of leakage through the ventilation chamber (22) is with low loss.

9. Shaft seal according to one of Claims 1 to 8,
wherein the number and the shape of the ribs (26, 27) are selected so that the ribs (26, 27) are suitable for cooling the leakage in the ventilation chamber (25).

10. Shaft seal according to one of Claims 1 to 9,
wherein the gas seal (7, 13) is a gas-lubricated mechanical seal and/or the atmosphere seal (17) is a labyrinth seal or a carbon ring seal.

11. Shaft seal according to Claim 10,
wherein the gas-lubricated mechanical seal is constructed in a tandem arrangement, wherein the gas-lubricated mechanical seal has a primary seal (7) which can be acted upon by the process gas and be blocked on the process side, and a secondary seal (13) which is arranged downstream of the primary seal (7) in the direction of the atmosphere and safeguards this primary seal, wherein the ventilation chamber (22) is located between the secondary seal (13) and the atmosphere seal (17).

12. Shaft seal according to one of Claims 1 to 11,
wherein the built-in components feature a wire mesh.

## Revendications

1. Etanchéité d'arbre pour une turbomachine, dont le côté ( 3 ) processus peut être rendu étanche vis-à-vis de l'atmosphère ( 4 ) par l'étanchéité ( 7, 13, 17 ) d'arbre, comprenant une étanchéité ( 7, 13 ) au gaz de processus pouvant être alimentée en gaz ( 10 ) de processus et pouvant être fermée du côté ( 3 ) du processus et une étanchéité ( 17 ) à l'atmosphère pouvant être alimentée en air ( 20 ) et pouvant être fermée du côté de l'atmosphère, ainsi qu'une chambre ( 22 ) de désaération s'étendant autour d'un arbre ( 1 ) de la turbomachine et disposée entre l'étanchéité ( 7, 13 ) au gaz de processus et l'étanchéité ( 17 ) à l'atmosphère pour collecter et évacuer de la fuite de gaz de processus, qui est entrée par l'étanchéité ( 7, 13 ) au gaz de processus, et de la fuite d'air, qui est entrée par l'étanchéité ( 17 ) à l'atmosphère, la chambre ( 22 ) de désaération ayant, sur son côté à l'intérieur radialement, une entrée ( 23 ) de fuite et, sur son côté extérieur radialement, une sortie ( 24 ) de fuite, ainsi qu'entre l'entrée ( 23 ) de fuite et la sortie ( 24 ) de fuite des garnissages ( 26, 27 ), **caractérisée en ce que** les garnissages ont des nervures ( 26, 27 ), qui s'étendent radialement et par lesquelles il est formé, dans la chambre ( 22 ) de désaération, des canaux ( 25 ) de désaération, par lesquels la fuite peut passer de l'entrée ( 23 ) de fuite à la sortie ( 24 ) de fuite, de sorte que le volume du mélange composé de la fuite de gaz de processus et de la fuite d'air dans la chambre ( 22 ) de désaération est petit, si bien que la chambre ( 22 ) de désaération a une fonction d'arrêt de flamme en ce qui concerne une inflammation de la fuite à l'entrée ( 23 ) de fuite et/ou que la fuite n'est pas inflammable dans la chambre ( 22 ) de désaération.

2. Etanchéité d'arbre suivant la revendication 1,
dans laquelle la chambre ( 22 ) de désaération est constituée sous la forme d'un espace annulaire cylindrique autour de l'arbre ( 1 ), dans lequel les nervures ( 26, 27 ) s'étendent sous forme de rayons autour de l'arbre ( 1 ).

3. Etanchéité d'arbre suivant la revendication 2,
dans laquelle l'étendue périphérique d'au moins certaines des nervures ( 27 ) augmente avec le rayon.

4. Etanchéité d'arbre suivant la revendication 3,
dans laquelle les nervures ( 27 ) ont des dimensions telles que, sur le rayon, la section transversale des canaux ( 25 ) de désaération est constante.

5. Etanchéité d'arbre suivant l'une des revendications 2 à 3,
dans laquelle l'étendue périphérique d'au moins certaines des nervures ( 26 ) est constante sur le rayon.

6. Etanchéité d'arbre suivant la revendication 2 à 4,
dans laquelle la section transversale traversée effectivement à l'entrée ( 23 ) de fuite est à peu près aussi grande que la section transversale traversée effectivement à la sortie ( 24 ) de fuite.

7. Etanchéité d'arbre suivant la revendication 6,
dans laquelle la section transversale traversée effectivement à la sortie ( 24 ) de fuite est supérieure ou égale à la section transversale traversée effectivement d'un conduit ( 29 ) d'évacuation de fuite raccordé à la sortie ( 24 ) de fuite.

8. Etanchéité d'arbre suivant l'une des revendications 1 à 6,
dans laquelle les nervures ( 26, 27 ) sont arrondies ( 28 ) sur leur côté intérieur radialement, de sorte que l'écoulement de la fuite dans la chambre ( 22 ) de désaération a peu de perte.

9. Etanchéité d'arbre suivant l'une des revendications 1 à 8,
dans laquelle le nombre et la forme des nervures ( 26, 27 ) sont choisis de manière à ce que les nervures ( 26, 27 ) conviennent au refroidissement de la fuite dans la chambre ( 25 ) de désaération.

10. Etanchéité d'arbre suivant l'une des revendications 1 à 9,
dans laquelle l'étanchéité ( 7, 13 ) au gaz est une étanchéité à anneau glissant lubrifié au gaz et/ou l'étanchéité ( 17 ) à l'atmosphère est une étanchéité à labyrinthe ou une étanchéité à anneau de charbon.

11. Etanchéité d'arbre suivant la revendication 10,
dans laquelle l'étanchéité à anneau glissant lubrifié au gaz est réalisée en suivant un agencement tandem, l'étanchéité à anneau glissant lubrifié au gaz ayant une étanchéité ( 7 ) primaire pouvant être alimentée en gaz de processus et pouvant être fermée du côté du processus et une étanchéité ( 13 ) secondaire disposée derrière dans la direction allant vers l'atmosphère, de l'étanchéité ( 7 ) primaire et la sécurisant, la chambre ( 22 ) de désaération étant implantée entre l'étanchéité ( 13 ) secondaire et l'étanchéité ( 17 ) à l'atmosphère.

12. Etanchéité d'arbre suivant l'une des revendications 1 à 11,
dans laquelle les garnissages ont un grillage en fil métallique.
